# FASCICULE DE BREVET EUROPEEN

(11) **EP 2 227 125 B1**
(45) Date de publication et mention de la délivrance du brevet: **18.01.2012**
(21) Numéro de dépôt: 08872030.5
(22) Date de dépôt: 07.11.2008
(51) Int. Cl.: A47J 43/07, A47J 19/02

(54) **APPAREIL ÉLECTROMÉNAGER COMPRENANT UN RÉCIPIENT DE TRAVAIL MUNI D'UN FILTRE**
ELEKTRISCHE HAUSHALTSANWENDUNG MIT EINEM ARBEITSBEHÄLTER MIT FILTER
ELECTRICAL HOUSEHOLD APPLIANCE COMPRISING A WORKING CONTAINER FITTED WITH A FILTER

(30) Priorité: 15.11.2007 FR 0708025
(43) Date de publication de la demande: 15.09.2010
(73) Titulaire: SEB S.A., 69130 Ecully (FR)
(72) Inventeur: FERON, Stéphanie, 53440 Marcille-la-Ville (FR); FOLLEZOUR, Anne-Estelle, 53100 Chatillon-sur-Colmont (FR); MARTIN, Philippe, 53240 Andouille (FR)
(74) Mandataire: Kiehl, Hubert
(86) Numéro de dépôt international: PCT/FR2008/001579
(87) Numéro de publication internationale: WO 2009/098368

(56) Documents cités:
- WO-A-99/59454
- JP-A- 2002 336 139

## Description

La présente invention se rapporte au domaine technique général des appareils électroménager de préparation culinaire comportant un boîtier renfermant un moteur pour l'entraînement d'un outil rotatif au fond d'un récipient de travail et se rapporte plus particulièrement à un appareil électroménager de préparation culinaire dans lequel le récipient de travail comporte un filtre s'étendant autour de l'outil rotatif et définit une barrière filtrante divisant le volume à l'intérieur du récipient entre un espace de mixage disposé à l'intérieur du filtre et un volume collecteur disposé à la périphérie du filtre.

Il est connu, de la demande de brevet WO 99/59454, un appareil blender de préparation culinaire comportant un récipient renfermant un outil rotatif et comprenant un filtre s'étendant autour de l'outil rotatif, le filtre définissant une barrière filtrante entre un espace de mixage à l'intérieur du filtre et un espace collecteur à l'extérieur du filtre. Un tel appareil permet de faire du lait de soja en introduisant des pousses de soja à l'intérieur du filtre, en les mixant après avoir introduit un peu d'eau dans le récipient, puis en récupérant le jus à l'extérieur du filtre.

Un tel appareil peut également être utilisé pour réaliser des jus de fruits, en plaçant les fruits dans le filtre et en mixant le tout avec un peu d'eau. Cependant, un tel appareil présente l'inconvénient de posséder un espace de récupération du jus à l'extérieur du filtre qui n'est pas soumis au brassage de l'outil rotatif de sorte que le mélange obtenu dans l'espace collecteur n'est pas homogène, laissant souvent apparaître une couche de liquide et une couche de fibres. Il s'ensuit que lorsque l'utilisateur verse une partie de la préparation ainsi obtenue dans un verre, il obtient dans un premier temps soit majoritairement de l'eau, soit majoritairement des fibres en fonction de la couche qui est déversée.

Aussi, un but de la présente invention est de proposer un appareil de préparation culinaire remédiant à cet inconvénient en permettant la réalisation d'une préparation homogène dans l'espace de récupération du jus, et qui soit simple et économique à réaliser.

A cet effet, l'invention se rapporte à un appareil électroménager de préparation culinaire comportant un boîtier renfermant un moteur pour l'entraînement d'un outil rotatif au fond d'un récipient de travail, le récipient comportant un filtre s'étendant autour de l'outil rotatif et définissant une barrière filtrante divisant le volume à l'intérieur du récipient entre un espace de mixage à l'intérieur du filtre et un espace collecteur à l'extérieur du filtre, caractérisé en ce que l'espace collecteur comporte des éléments de brassage qui peuvent être mis en mouvement au moyen d'un élément actionneur.

Selon une autre caractéristique de l'invention, l'élément actionneur est un élément de préhension accessible depuis l'extérieur du récipient.

Selon une autre caractéristique de l'invention, les éléments de brassage sont solidaires d'une partie du filtre qui est mobile en rotation.

Selon une autre caractéristique de l'invention, le filtre s'étend depuis le fond jusqu'au sommet du récipient, et se prolonge à l'extérieur du récipient par l'élément de préhension.

Selon une autre caractéristique de l'invention, le récipient de travail est fermé par un couvercle, l'élément de préhension traversant une ouverture du couvercle.

Selon encore une autre caractéristique de l'invention, le couvercle comporte une ouverture débouchant uniquement sur l'espace de mixage du filtre.

Selon encore une autre caractéristique de l'invention, le filtre comporte une section de passage ajustable.

Selon une autre caractéristique de l'invention, le filtre comporte deux parties mobiles l'une par rapport à l'autre, les deux parties comportant des ouvertures pouvant venir en vis-à-vis et pouvant être au moins partiellement masquées en déplaçant les deux parties l'une par rapport à l'autre pour faire varier la section de passage du filtre.

Selon une autre caractéristique de l'invention, le récipient comporte un robinet permettant la distribution du liquide présent dans l'espace collecteur.

L'invention concerne également un filtre destiné à équiper un récipient d'appareil électroménager de préparation culinaire de type blender, le filtre étant destiné à entourer un outil rotatif de manière à former une barrière filtrante entre un espace de mixage comprenant l'outil rotatif et un espace collecteur disposé à l'extérieur du filtre, caractérisé en ce que le filtre comporte des éléments agitateurs s'étendant à l'extérieur du filtre.

Selon une autre caractéristique de l'invention, les éléments agitateurs sont constitués par au moins une ailette s'étendant radialement au filtre.

Selon une autre caractéristique de l'invention, le filtre comporte deux ailettes disposées à 180° l'une de l'autre.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil de préparation culinaire selon un mode particulier de réalisation de l'invention,
- la figure 2 est une vue en coupe du récipient de l'appareil de la figure 1,
- la figure 3 est une vue en perspective du récipient en cours de montage de l'embase amovible et du filtre,
- les figures 4 et 5 sont respectivement une vue en perspective et une vue de côté du filtre démonté,
- les figures 6 et 7 sont des vues de côté du filtre lors ce dernier est respectivement dans une première position de filtrage et dans une deuxième position de filtrage.

Seuls les éléments nécessaires à la compréhension de l'invention ont été représentés. Pour faciliter la lecture des dessins les mêmes éléments portent les mêmes références d'une figure à l'autre.

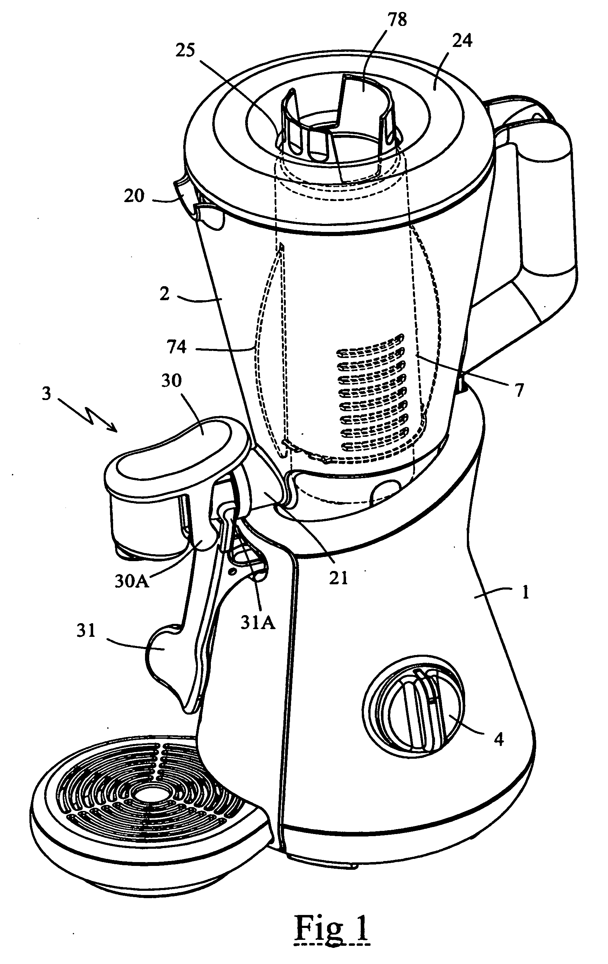

La figure 1 représente un appareil électroménager de préparation culinaire, de type blender, comportant un boîtier 1 servant de socle à un récipient 2 amovible apte à contenir des aliments liquides ou solides, le récipient 2 comportant un bec verseur 20 et un robinet de distribution 3 monté de manière amovible sur un conduit 21 débouchant radialement à la paroi du récipient 2, à proximité de l'extrémité inférieure de ce dernier.

Le robinet 3 peut être actionné soit directement, en appuyant sur un levier supérieur 30, soit indirectement en appuyant, sur une pédale 31 portée par le boîtier 1, la pédale 31 comportant des branches 31A venant agir sur des excroissances latérales 30A du levier supérieur pour faire basculer ce dernier

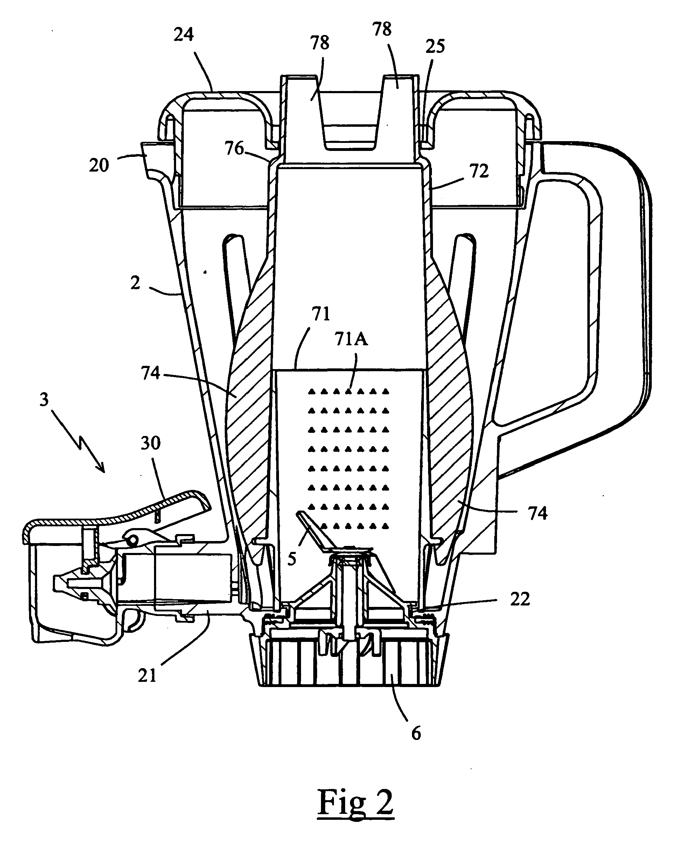

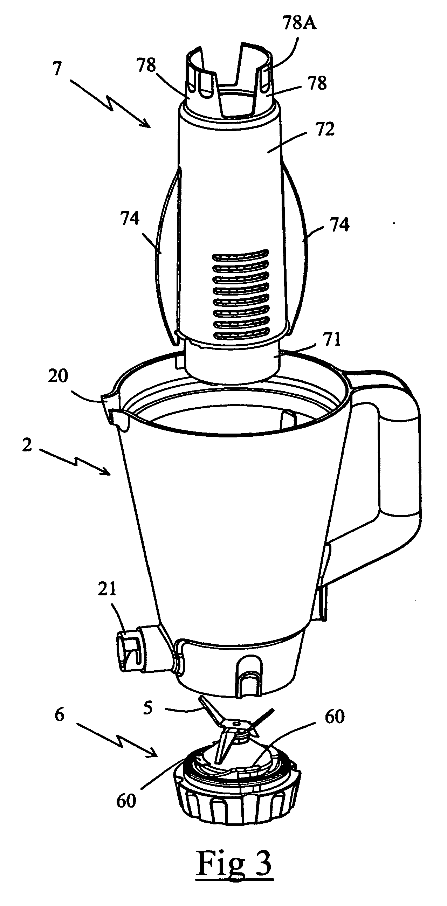

Le boîtier 1 renferme classiquement un moteur, non représenté sur les figures, dont la mise en route et la vitesse de fonctionnement du moteur sont contrôlées au moyen d'un bouton de commande 4 présent sur le boîtier 1, ce moteur permettant l'entraînement en rotation d'un outil coupant 5, visible sur les figures 2 et 3, disposé dans le fond du récipient 2. De manière avantageuse, et afin de faciliter le nettoyage du récipient 2, l'outil coupant 5 est porté par une embase 6 amovible du récipient 2 qui est vissée au niveau d'une ouverture 22 présente dans le fond du récipient 2.

Conformément à l'invention, le récipient 2 renferme un filtre 7 venant entourer l'outil coupant 5 de manière à définir une barrière filtrante divisant le volume intérieur du récipient 2 entre un espace de mixage à l'intérieur du filtre 7, contenant l'outil coupant 5, et un espace collecteur situé à l'extérieur du filtre 7. De manière avantageuse, le récipient 2 est fermé par un couvercle 24 venant recouvrir l'espace collecteur du récipient 2, le couvercle 24 comportant une ouverture 25 venant en regard de l'espace de mixage et permettant l'introduction d'aliments à l'intérieur du filtre 7 sans soulever le couvercle 24.

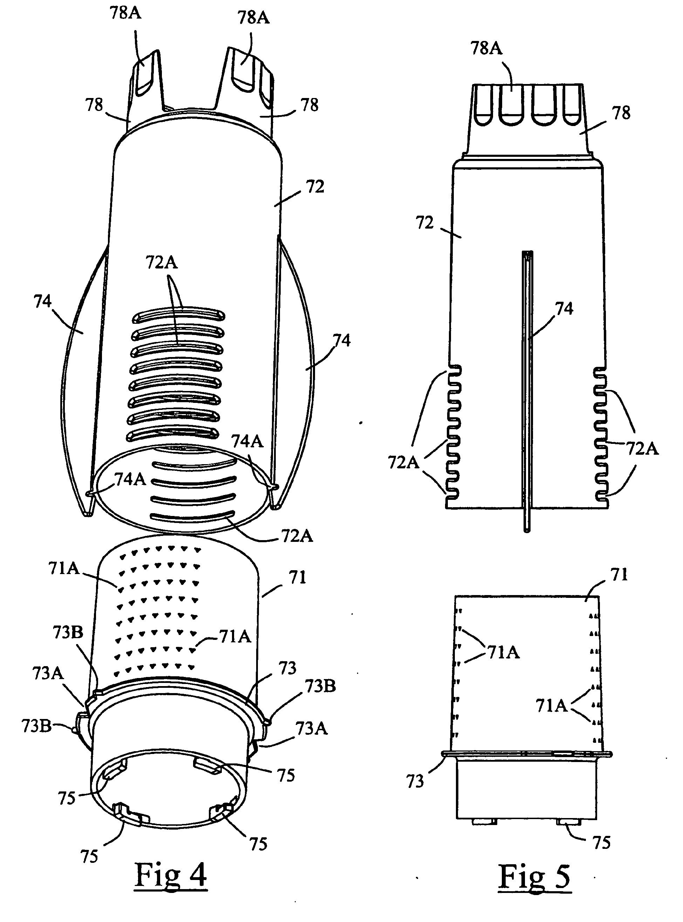

conformément aux figures 4 et 5, le filtre 7 est préférentiellement constitué par deux parties 71, 72 venant s'engager l'une sur l'autre, le filtre 7 comportant une partie inférieure 71 présentant la forme d'un manchon faiblement conique venant s'engager à l'intérieur d'une partie supérieure 72 présentant une enveloppe de forme complémentaire, la partie inférieure 71 du filtre 7 comporte une bride annulaire 73 formant une butée axiale sur laquelle vient reposer l'extrémité inférieure de la partie supérieure 72 du filtre 7.

La partie inférieure 71 du filtre présente avantageusement une extrémité inférieure de section circulaire présentant un diamètre intérieur correspondant au diamètre de l'ouverture 22 du récipient de sorte que le bord inférieur de la partie inférieure 71 du filtre vient reposer sur le fond du récipient 2, en bordure de l'ouverture 22, et comprend des pattes de verrouillage 75 venant s'engager par rotation sous des rails de guidage 60 portés par l'embase 6 pour former avec ces derniers une liaison baïonnette venant fixer l'extrémité inférieure du filtre sur le fond du récipient 2.

Selon un mode particulier de réalisation de l'invention, le filtre 7 comporte deux ailettes agitatrices 74 disposées à l'opposée l'une de l'autre et s'étendant radialement à l'extérieur de la partie supérieure du filtre, chaque ailette 74 s'étendant sur une hauteur de l'ordre de 13 cm et présentant un contour circulaire de sorte que les ailettes agitatrices 74 présentent une largeur radiale de l'ordre de 15 mm à mi-hauteur, cette largeur diminuant progressivement jusqu'aux extrémités longitudinales de l'ailette 74.

De manière avantageuse, les deux ailettes agitatrices 74 se prolongent au-delà de l'extrémité inférieure de l'enveloppe et comporte une extrémité inférieure en saillie qui vient s'engager dans une encoche 73A prévu à cet effet sur la bride annulaire 73, les ailettes agitatrices 74 comprenant une rainure 74A adaptée pour permettre l'engagement de la bride annulaire 73 et la rotation de la partie supérieure 72 du filtre par rapport à la partie inférieure 71 entre deux butées 73B prévues sur la bride 73 et disposées à 45° l'une de l'autre.

La partie supérieure 72 du filtre comporte, à hauteur du bord supérieur du récipient 2, un épaulement 76 dont le diamètre correspond sensiblement au diamètre de l'ouverture 25 du couvercle 24, cet épaulement se prolongeant par deux languettes de préhension 78 adaptées pour traverser l'ouverture 25 du couvercle 24 et faire saillie à l'extérieur du récipient 2. Les deux languettes 78 présentent avantageusement une forme semi-cylindrique et comportent des nervures 78A adaptées pour recevoir les doigts de la main.

Afin d'assurer la filtration entre l'espace de mixage à l'intérieur du filtre 7 et l'espace collecteur à l'extérieur du filtre 7, le manchon de la partie inférieure 71 du filtre comporte des orifices calibrés 71A agencés suivant deux réseaux disposés à 180° l'un de l'autre, l'enveloppe de la partie supérieure du filtre 72 comportant des fentes 72A venant au moins partiellement en regard des orifices calibrés 71A lorsque la partie supérieure 72 du filtre est correctement montée sur la partie inférieure 71 du filtre. A titre d'exemple, chaque réseau comporte cinquante six orifices calibrés 71 A régulièrement réparties sur huit lignes et sept colonnes.

De manière préférentielle, chaque orifice calibré 71 A présente la forme d'un triangle, d'une hauteur de l'ordre de 1,5 mm, orienté pointe en haut pour l'un des réseaux, visible sur la figure 2, et pointe en bas pour l'autre réseau, visible sur la figure 4, les deux réseaux d'orifices 71A étant légèrement décalés verticalement l'un par rapport à l'autre, ainsi qu'on peut mieux le voir sur la figure 5.

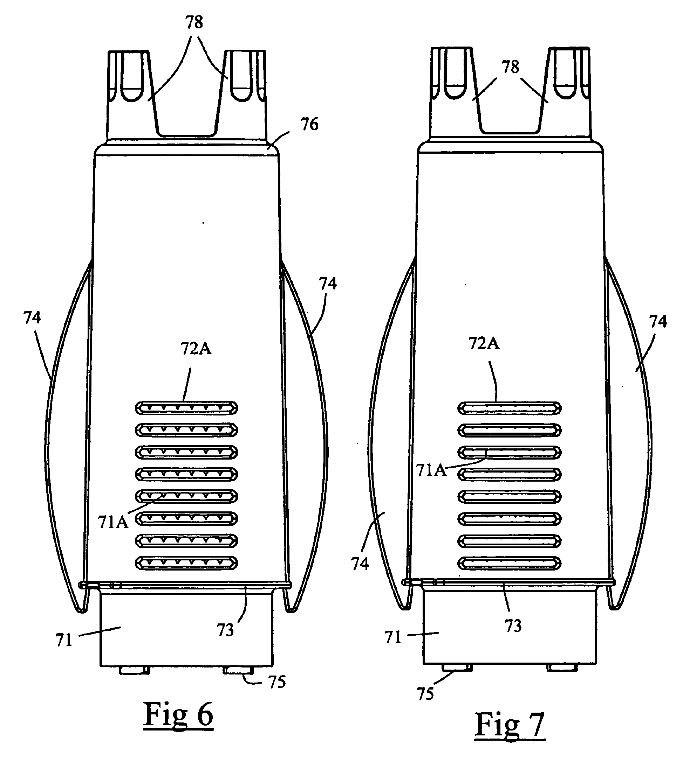

Les fentes 72A s'étendent avantageusement sur une largeur de l'ordre de 35 mm et présentent une hauteur de l'ordre de 2,5 mm, les fentes 72A étant disposées de telle sorte que, dans une première position d'engagement des ailettes 74 de la partie supérieure 72 du filtre dans les encoches 73A de la partie inférieure 71 du filtre, le bord des fentes 72A se trouve en bordure des orifices triangulaires 71A ainsi que cela est illustré à la figure 6. Dans cette position du filtre 7, la totalité de la surface des orifices triangulaires 71A se trouve en regard de la fente 72A, de sorte que le filtre 7 est réglé avec le diamètre de filtration le plus important.

A l'inverse, dans une seconde position d'engagement des ailettes 74 de la partie supérieure 72 du filtre dans les encoches 73A de la partie inférieure 71 du filtre, dans laquelle la partie supérieure 72 du filtre est tournée de 180° par rapport à la partie inférieure 71, le fentes 72A se trouvent légèrement décalées verticalement par rapport aux orifices triangulaires 71A de sorte que ces derniers se trouvent partiellement masqués par l'enveloppe de la partie supérieure 72, ainsi que cela est illustré sur la figure 7. Dans cette position, seule la pointe des orifices triangulaires 71A se trouve en regard des fentes, ce qui permet d'obtenir un diamètre de filtration plus fin du filtre 7.

Le fonctionnement de l'appareil électroménager va maintenant être décrit.

Lorsque l'utilisateur souhaite réaliser un jus de fruit, tel que du jus de fraise, il assemble la partie supérieure 72 du filtre sur la partie inférieure 71 en introduisant l'extrémité des ailettes 74 à l'intérieur des encoches 73A de la bride 73 en choisissant, parmi les deux possibilités offertes, l'orientation adaptée au degré de filtration désiré, puis il tourne la partie supérieure 72 du filtre par rapport à la partie inférieure 71 du filtre pour amener le bord des rainures 74A en appui contre les butées 73B et les orifices 71A de filtration en regard des fentes 72A.

Le filtre 7 est alors introduit dans le récipient 2 en venant engager les pattes de verrouillage 75 de la partie inférieure du filtre 7 dans les rails de guidage 60 de l'embase 6 amovible.

L'utilisateur introduit ensuite de l'eau dans le récipient 2 et les fruits à l'intérieur du filtre. Le couvercle 24 peut alors être disposé sur le récipient 2 pour réduire le risque d'éclaboussure, puis le moteur de l'appareil blender est mis en route au moyen du bouton de commande 4 de manière à ce que les fruits soient broyés par l'outil rotatif 5 et que le jus qui en résulte se diffuse par l'effet de la force centrifuge au travers des orifices 71A du filtre.

Ce jus et les fibres broyées sont alors recueillis dans l'espace collecteur à extérieur du filtre 7. Etant donné que cet espace collecteur n'est pas soumis à l'agitation de l'outil rotatif 5, du fait de la présence du filtre 7 qui forme une barrière de séparation, les fibres recueillies dans cet espace collecteur ont tendance à ne pas se mélanger avec l'eau présente dans le récipient 2, de sorte qu'il apparaît une stratification entre les couches de liquide et les fibres.

Pour palier à cet inconvénient, l'utilisateur peut faire tourner la partie supérieure 72 du filtre en saisissant les languettes de préhension 78 et en appliquant un mouvement de va et vient entre les deux butées 73B de la bride 73 pour engendrer un déplacement en rotation des ailettes agitatrices 74 autour de l'axe central du récipient 2 et générer ainsi un brassage des aliments présents dans l'espace collecteur. Un tel dispositif de brassage, accessible depuis l'extérieur du récipient 2, permet d'obtenir un mélange homogène avant de déverser le résultat de cette préparation par le bec verseur ou par le robinet de distribution 3 du récipient.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non illustrée, le filtre pourra être réalisé en une seule partie et les ailettes agitatrices pourront être portées par une armature indépendante du filtre s'étendant dans l'espace collecteur, l'armature comportant des éléments de préhension accessibles depuis l'extérieur, par exemple en traversant le couvercle.

Ainsi, dans une autre variante de réalisation, les ailettes agitatrices pourront s'étendre dans une direction oblique par rapport à l'axe du récipient, les ailettes pouvant ainsi présenter la forme d'une hélicoïde s'étendant autour du filtre.

Ainsi, dans une variante de réalisation non représentée les ailettes agitatrices pourront être mises en mouvement au moyen d'un moteur.

## Revendications

1. Appareil électroménager de préparation culinaire comportant un boîtier (1) renfermant un moteur pour l'entraînement d'un outil rotatif (5) au fond d'un récipient (2) de travail, le récipient (2) comportant un filtre (7) s'étendant autour de l'outil rotatif (5) et définissant une barrière filtrante divisant le volume à l'intérieur du récipient (2) entre un espace de mixage à l'intérieur du filtre (7) et un espace collecteur à l'extérieur du filtre (7), **caractérisé en ce que** ledit espace collecteur comporte des éléments de brassage (74) qui peuvent être mis en mouvement au moyen d'un élément actionneur (78).

2. Appareil selon la revendication 1, **caractérisé en ce que** ledit élément actionneur est un élément de préhension (78) accessible depuis l'extérieur du récipient (2).

3. Appareil selon l'une quelconque des revendications 1 à 2, **caractérisé en ce que** lesdits éléments de brassage (74) comprennent des ailettes s'étendant radialement au récipient (2).

4. Appareil selon l'une quelconque des revendications 1 à 3, **caractérisé en ce que** lesdits éléments de brassage (74) sont solidaires d'un partie (72) du filtre (7) qui est mobile en rotation.

5. Appareil selon l'une quelconque des revendications 2 à 4, **caractérisé en ce que** le filtre (7) s'étend depuis le fond jusqu'au sommet du récipient (2), et se prolonge à l'extérieur du récipient par ledit élément de préhension (78).

6. Appareil selon la revendication 5, **caractérisé en ce que** le récipient de travail est fermé par un couvercle (24) et **en ce que** ledit élément de préhension (78) traverse une ouverture (25) dudit couvercle (24).

7. Appareil selon la revendication 6, **caractérisé en ce que** ledit couvercle (24) comporte une ouverture (25) débouchant uniquement sur l'espace de mixage du filtre (7).

8. Appareil selon l'une quelconque des revendications 1 à 7, **caractérisé en ce que** le filtre (7) comporte une section de passage ajustable.

9. Appareil selon la revendication 8, **caractérisé en ce que** filtre (7) comporte deux parties mobiles (71, 72) l'une par rapport à l'autre, les deux parties (71, 72) comportant des ouvertures (71A, 72A) pouvant venir en vis-à-vis et pouvant être au moins partiellement masquées en déplaçant les deux parties (71, 72) l'une par rapport à l'autre pour faire varier la section de passage du filtre.

10. Appareil selon l'une quelconque des revendications 1 à 9, **caractérisé en ce que** le récipient (2) comporte un robinet (3) permettant la distribution du liquide présent dans l'espace collecteur.

11. Filtre destiné à équiper un récipient d'appareil électroménager de préparation culinaire de type blender, le filtre (7) étant destiné à entourer un outil rotatif (5) de manière à former une barrière filtrante entre un espace de mixage comprenant ledit outil rotatif (5) et un espace collecteur disposé à l'extérieur du filtre (7), **caractérisé en ce que** le filtre (7) comporte des éléments agitateurs (74) s'étendant à l'extérieur du filtre (7).

12. filtre selon la revendication 11, **caractérisé en ce que** les éléments agitateurs (74) sont constitués par au moins une ailette s'étendant radialement au filtre (7).

## Claims

1. An electrical household food preparation appliance comprising a casing (1) enclosing a motor for driving a rotary tool (5) in the bottom of a working container (2), the container (2) comprising a filter (7) extending around the rotary tool (5) and defining a filter barrier which divides the volume with in the container (2) between a mixing space inside the filter (7) and a collecting space outside the filter (7), said appliance being **characterised in that** said collecting space comprises stirring elements (74) which can be operated by means of an actuating element (78).

2. An appliance according to claim 1, **characterised in that** said actuating element is a grip element (78) accessible from outside the container (2).

3. An appliance according to any one of claims 1 to 2, **characterised in that** said stirring elements (74) comprise fins extending radially to the container (2).

4. An appliance according to any one of claims 1 to 3, **characterised in that** said stirring elements (74) are integral with a part (72) of the filter (7) which is rotatable.

5. An appliance according to any one of claims 2 to 4, **characterised in that** the filter (7) extends from the bottom up to the top of the container (2), and extends outside the container by said grip element (78).

6. An appliance according to claim 5, **characterised in that** the working container is closed by a lid (24) and that said grip element (78) passes through an opening (25) on said lid (24).

7. An appliance according to claim 6, **characterised in that** said lid (24) contains an opening (25) only into the mixing space of the filter (7).

8. An appliance according to any one of claims 1 to 7, **characterised in that** the filter (7) comprises an adjustable flow area.

9. An appliance according to claim 8, **characterised in that** the filter (7) comprises two parts (71, 72) moveable with respect to each other, the two parts (71, 72) comprising openings (71A, 72A) liable to come face to face and liable to be at least partially masked by moving the two parts (71, 72) with respect to each other to vary the flow area of the filter.

10. An appliance according to any one of claims 1 to 9, **characterised in that** the container (2) comprises a tap (3) for dispensing the liquid present in the collecting space.

11. A filter intended to equip a container of an electrical household food preparation appliance such as a blender, the filter (7) being designed to surround a rotary tool (5) so as to form a filter barrier between a mixing space comprising said rotary tool (5) and a collecting space arranged outside the filter (7), **characterised in that** the filter (7) comprises stirring elements (74) extending outside the filter (7).

12. A filter according to claim 11, **characterised in that** the stirring elements (74) are made up of at least one fin extending radially to the filter (7).

## Patentansprüche

1. Elektrohaushaltsgerät für kulinarische Zubereitungen, umfassend ein Gehäuse (1), das einen Motor für den Antrieb eines Drehwerkzeugs (5) am Boden eines Arbeitsbehälters (2) einschließt, wobei der Behälter (2) einen Filter (7) umfasst, der sich rund um das Drehwerkzeug (5) erstreckt und eine filtrierende Barriere definiert, die das Volumen im Behälter (2) in einen Mixbereich im Inneren des Filters (7) und einen Auffangbereich außerhalb des Filters (7) unterteilt, **dadurch gekennzeichnet, dass** der Auffangbereich Rührelemente (74) umfasst, die mithilfe eines Betätigungselementes (78) in Bewegung gesetzt werden können.

2. Gerät nach Anspruch 1, **dadurch gekennzeichnet, dass** das Betätigungselement ein Greifelement (78) ist, das von außerhalb des Behälters (2) zugänglich ist.

3. Gerät nach einem der Ansprüche 1 bis 2, **dadurch gekennzeichnet, dass** die Rührelemente (74) Flügel umfassen, die sich radial zum Behälter (2) erstrecken.

4. Gerät nach einem der Ansprüche 1 bis 3, **dadurch gekennzeichnet, dass** die Rührelemente (74) fest mit einem Teil (72) des Filters (7) verbunden sind, der drehbeweglich ist.

5. Gerät nach einem der Ansprüche 2 bis 4, **dadurch gekennzeichnet, dass** sich der Filter (7) vom Boden bis zur Oberseite des Behälters (2) erstreckt und außerhalb des Behälters vom Greifelement (78) verlängert wird.

6. Gerät nach Anspruch 5, **dadurch gekennzeichnet, dass** der Arbeitsbehälter von einem Deckel (24) verschlossen wird, und dadurch, dass das Greifelement (78) durch eine Öffnung (25) des Deckels (24) hindurchragt.

7. Gerät nach Anspruch 6, **dadurch gekennzeichnet, dass** der Deckel (24) eine Öffnung (25) aufweist, die ausschließlich in den Mixbereich des Filters (7) mündet.

8. Gerät nach einem der Ansprüche 1 bis 7, **dadurch gekennzeichnet, dass** der Filter (7) einen verstellbaren Durchlassquerschnitt aufweist.

9. Gerät nach Anspruch 8, **dadurch gekennzeichnet, dass** der Filter (7) zwei zueinander bewegliche Teile (71, 72) umfasst, wobei die zwei Teile (71, 72) Öffnungen (71A, 72A) umfassen, die gegenüberliegend angeordnet werden können und die sich zumindest teilweise durch gegeneinander verlaufendes Verschieben der zwei Teile (71, 72) verdecken lassen, um den Durchlassquerschnitt des Filters zu verändern.

10. Gerät nach einem der Ansprüche 1 bis 9, **dadurch gekennzeichnet, dass** der Behälter (2) einen Hahn (3) umfasst, der die Abgabe der Flüssigkeit ermöglicht, die im Auffangbereich vorhanden ist.

11. Filter zur Ausstattung eines Behälters eines Elektrohaushaltsgerätes für kulinarische Zubereitungen der Sorte Standmixer, wobei der Filter (7) ein Drehwerkzeug (5) umgeben soll, so dass er eine filtrierende Barriere zwischen einem Mixbereich, der das Drehwerkzeug (5) umfasst, und einem Auffangbereich, der außerhalb des Filters (7) angeordnet ist, bildet, **dadurch gekennzeichnet, dass** der Filter (7) Mischelemente (74) umfasst, die sich außerhalb des Filters (7) erstrecken.

12. Filter nach Anspruch 11, **dadurch gekennzeichnet, dass** die Mischelemente (74) von mindestens einem Flügel gebildet werden, der sich radial zum Filter (7) erstreckt.
